# EUROPEAN PATENT APPLICATION

(11) **EP 3 046 092 A1**
(43) Date of publication of application: **20.07.2016**
(21) Application number: 14844216.3
(22) Date of filing: 11.08.2014
(51) Int. Cl.: G08G 5/02, B64D 45/04, B64F 1/36

(54) **LANDING DECISION ASSISTANCE SYSTEM, LANDING DECISION ASSISTANCE METHOD, AND LANDING DECISION ASSISTANCE PROGRAM**

(30) Priority: 12.09.2013 JP 2013189629
(71) Applicant: Japan Aerospace Exploration Agency, Chofu-shi, Tokyo 182-8522 (JP)
(72) Inventor: IIJIMA, Tomoko, Mitaka-shi Tokyo 181-0015 (JP); MATAYOSHI, Naoki, Mitaka-shi Tokyo 181-0015 (JP); YOSHIKAWA, Eiichi, Mitaka-shi Tokyo 181-0015 (JP)
(74) Representative: dompatent von Kreisler Selting Werner - Partnerschaft von Patent- und Rechtsanwälten mbB
(86) International application number: PCT/JP2014/071147
(87) International publication number: WO 2015/037375

(57) **Abstract**

There are provided a landing decision support system, a landing decision support method, and a landing decision support program that allow a general user other than a specialist to easily and accurately read information useful for a decision of an aircraft landing. A landing decision support system 1 for providing information for supporting the decision of the aircraft landing has a screen generation unit 220 that generates various screens displayed in a display unit, and a display control unit 260 that causes the display unit to display the various screens generated by the screen generation unit 220, the screen generation unit 220 includes an echo intensity screen generation unit 240 that generates an echo intensity screen, and echo intensity information included in the echo intensity screen is generated based on echo intensity data of an observation target acquired by a weather sensor, and displays a horizontal distribution of an echo intensity using a summary statistic of the echo intensity in an area around an airport in a predetermined altitude range.

## Description

### [Technical Field]

The present invention relates to a landing decision support system, a landing decision support method, and a landing decision support program each for providing information for supporting a decision of an aircraft landing.

### [Background Art]

Conventionally, as a device for providing information on a significant change in wind at a low altitude (low-level turbulence), WTWS (Windshear and Turbulence Warning System) developed by Hong Kong Observatory (see NPLs 1 and 2), JAWS (Juneau Airport Wind System) (see NPL 3) developed by NCAR (National Center for Atmospheric Research) as a prototype, and information service systems developed by Japan Meteorological Agency (see NPLs 4 and 5) are well-known. The prototype JAWS is based on an initial project conducted by NCAR in Hong Kong, and hence the prototype JAWS is similar to WTWS. These devices are intended to provide only "information items on wind" such as a significant sustained change in wind (windshear) and a rapid and irregular change in wind (turbulence). These wind information items are presented to controllers in the case of the former and to various users (example: automated flight service station specialists, airline dispatchers, pilot) in the case of the latter in the form of text display or graphic display. A text display device is used by the controller, and hence only alert information related to the windshear is briefly displayed in the form of the text. On the other hand, a graphic display device displays an image of the current condition of the windshear and the alert in addition to the past condition of the windshear.

### [Citation List]

### [Non Patent Literature]

[NPL 1] Ping-Wah Ll, Weather - Its Detection and Alerting, HKO Reprint 636, Symposium of Science in Public Service, Science Museum, Hong Kong, 27 April 2006.
[NPL 2] Hong Kong Observatory, Windshear and Turbulence in Hong Kong - information for pilots, 3rd edition, 2010.
[NPL 3] Robert Barron, Overview of the Juneau Terrain-Induced Turbulence and Windshear Project.
[NPL 4] Japan Meteorological Agency, aviation weather information service system (Kouku-kishou-jouhou teikyou sisutemu) (MetAir), [Online], [retrieved on July 19, 2013], the Internet website at <URL:http://www.metinfo.go.jp/metair/view/login/index.html>
[NPL 5] Japan Meteorological Agency, observation by airport weather Doppler radar (kuukou-kishou-doppura-reda niyoru kannsoku), [Online], [retrieved on July 19, 2013], the Internet website at <URL:http://www.jma.go.jp/jma/kishou/know/kouku/2_kannsoku/23_ draw/23_draw.html>
[NPL 6] JAL Aero Consulting, "Research on low-level turbulence advisory system used in aircraft operation" (koukuuki-unnko ni kyousareru teisoufu-jyourann-adobaizari-sisutemu no chousa), February 28, 2013
[NPL 7] Air Traffic Service Research Institute, "Report on research on effect of adverse weather occurring in airport terminal on aircraft operation" (kukou-taminaru-nai de hasseisuru akutennkou no koukuki-unnkou eno eikyou-chousa-houkokusho), October 2009, [Online], [retrieved on July 19, 2013], the Internet website at <URL:http://www.jma.go.jp/jp/contents/index.html>

### [Summary of Invention]

### [Technical Problem]

However, although these conventional graphic display devices are aimed at various users, they are actually used mainly by the staff of Hong Kong Observatory in Hong Kong and are used mainly by specialists such as the staff of Japan Meteorological Agency in Japan, and a problem arises in that it is difficult for general users such as flight dispatchers and pilots other than the specialists to accurately read required information.

For example, even when low-level turbulence information is provided, the actual effect of the occurring low-level turbulence on an aircraft and piloting (pitch or roll, path deviation, actual difficulty in landing, and the like) differs depending on the model of the aircraft and the personal view of the pilot, and it is difficult to directly utilize the warning information in flight.

In addition, even when the warning information is provided from these systems, an event in which the aircraft can land without any problems or, on the other hand, though wind disturbance information is not issued, the aircraft actually encounters the wind disturbance at the point of landing and a go-around is executed often occurs in actual flight. This is because the low-level turbulence is an atmospheric phenomenon that is small in scale in terms of space and time so that there are cases where the disturbance itself disappears at the time of landing even when the warning is issued several minutes before the landing or the other way around. According to a research result, even when a windshear warning is actually issued, the probability of experiencing windshear is about several percent (see NPL 6).

To cope with this, the present invention solves these problems, and an object thereof is to provide a landing decision support system, a landing decision support method, and a landing decision support program that allow a general user other than specialists to easily and accurately read information useful for the decision of the aircraft landing.

### [Solution to Problem]

The present invention is a landing decision support system for providing information for supporting a decision of an aircraft landing including a screen generation unit that generates various screens displayed in a display unit, and a display control unit that causes the display unit to display the various screens generated by the screen generation unit, wherein the screen generation unit includes an echo intensity screen generation unit that generates an echo intensity screen, and echo intensity information included in the echo intensity screen is generated based on echo intensity data of an observation target acquired by a weather sensor and displays a horizontal distribution of an echo intensity, using a summary statistic of the echo intensity in an area around an airport in a predetermined altitude range, whereby the present invention solves the above problems.

Another aspect of the present invention is a landing decision support method for providing information for supporting a decision of an aircraft landing including generating by a display control unit an echo intensity screen including echo intensity information that is generated based on echo intensity data of an observation target acquired by a weather sensor and displays a horizontal distribution of an echo intensity using a summary statistic of the echo intensity in an area around an airport in a predetermined altitude range using an echo intensity screen generation unit, and causing a display unit to display the generated echo intensity screen, whereby the present invention solves the above problems.

Still another aspect of the present invention is a landing decision support program for providing information for supporting a decision of an aircraft landing causing a computer to execute a procedure of generating by an echo intensity screen generation unit an echo intensity screen including echo intensity information that is generated based on echo intensity data of an observation target acquired by a weather sensor and displays a horizontal distribution of an echo intensity using a summary statistic of the echo intensity in an area around an airport in a predetermined altitude range, and a procedure of causing a display unit to display the generated echo intensity screen using a display control unit, whereby the present invention solves the above problems.

### [Advantageous Effects of Invention]

According to first, twentieth, and twenty-first aspects of the present invention, the screen generation unit includes the echo intensity screen generation unit that generates the echo intensity screen, and the echo intensity information included in the echo intensity screen is generated based on the echo intensity data of the observation target acquired by the weather sensor and displays the horizontal distribution of the echo intensity using the summary statistic of the echo intensity in the area around the airport in the predetermined altitude range, whereby it is possible to determine a landing timing capable of avoiding visibility interference with the provision of the echo intensity information, it is possible to secure excellent viewability in the display while preventing failure to detect a local phenomenon and allow a user to intuitively grasp the echo intensity without requiring specialization in meteorology or the like by performing the display of the echo intensity by using the summary statistic, and it is possible to display a subtle echo such as a small echo that has just occurred by limiting the display of the echo to the area around the airport.

According to a second aspect of the present invention, the latest echo intensity information and prediction information on a future echo are displayed side by side in the echo intensity screen, whereby it becomes possible to easily compare the current condition of the radar echo with the condition of the radar echo at the time when the aircraft is expected to land actually so that perspicuity is enhanced and it becomes possible to excellently determine the landing timing.

According to a third aspect of the present invention, the echo intensity screen displays information on echo intensity at or below a designated altitude so as to superimpose the information on echo intensity on a map of the area around the airport indicative of positions of the airport, a landing path, and another aircraft, whereby it is possible to intuitively grasp the effect of the echo on the flight of the aircraft, and the display control unit updates the echo intensity screen at an interval of 1 minute to 2 minutes, whereby it is possible to cope with a changeable weather condition, the update interval becomes close to the update interval of a pilot report called PIREP, and an affinity is enhanced.

According to a fourth aspect of the present invention, the screen generation unit includes a warning screen generation unit that generates a warning screen including landing difficulty level information indicative of a landing difficulty level for an aircraft, and the landing difficulty level information is generated based on data on wind directions and data on wind speeds at a plurality of predetermined altitudes on the landing path acquired by the weather sensor, bearing data on a runway, and information on a model of the aircraft, whereby even a general user such as the flight dispatcher or the pilot who does not have technical skills of meteorology or the like can easily and accurately read the information deeply correlated with the decision of the aircraft landing. In addition, conventionally, the information to be transmitted to the aircraft by the flight dispatcher has not been organized and the method in which the information to be transmitted is determined using the experience and knowledge of the flight dispatcher from various display information items, and is provided to the aircraft has been adopted. However, by providing the warning screen, it becomes possible to understand the warning content and the content to be transmitted to the aircraft at sight, which contributes to an improvement in the situation awareness of the user and a reduction in mental workload.

According to a fifth aspect of the present invention, the landing difficulty level information includes the latest landing difficulty level for the aircraft and trend information indicative of a trend of change in the landing difficulty level, whereby it is possible to grasp the trend of change in the landing difficulty level at sight so that the decision of the landing timing is facilitated.

According to a sixth aspect of the present invention, the warning screen includes information indicative of increase/decrease of a head wind component of a wind speed along a runway direction in the predetermined altitude range and on the landing path, disturbance occurrence information indicative of occurrence of a wind disturbance and an altitude range in which the wind disturbance has occurred, and flight condition information indicative of an effect of the disturbance on a flight condition of the aircraft, whereby it is possible to grasp the wind disturbance to which attention should be paid and the effect on the flight condition without requiring expertise of meteorology or the like so that it is possible to easily and adequately plan the policy of future piloting.

According to a seventh aspect of the present invention, the screen generation unit further has a warning history screen generation unit that generates a warning history screen including information included in the past warning screen, whereby it is possible to grasp the trend of the warning content from the past information so that the decision of the landing timing is facilitated and it is possible to empirically grasp the periodicity of the warning content from the past information.

According to an eighth aspect of the present invention, the landing difficulty level information is generated for each model of the aircraft, whereby it is possible to provide the landing difficulty level information having high accuracy in which characteristics of the model of the aircraft are reflected, and the landing decision support system further includes a model switching unit that switches a target model of the landing difficulty level information to be displayed by the display unit according to a request from a user, whereby it becomes easy to perform a comparison between the models and the comparison can be used as reference information concerning the model of the aircraft to be operated in the airport.

According to a ninth aspect of the present invention, the screen generation unit further includes a graph screen generation unit that generates a graph screen including a graph indicative of a change of the head wind component of the wind speed along the runway direction on the landing path relative to an altitude, and a tabular screen generation unit that generates a tabular screen including a table indicative of the head wind component of the wind speed at each predetermined altitude on the landing path, the graph included in the graph screen and the table included in the tabular screen are generated based on the data on wind directions and the data on wind speeds at the plurality of predetermined altitudes on the landing path acquired by the weather sensor, and the display control unit causes the display unit to display the graph screen and the tabular screen side by side, whereby it becomes possible to perform, in one screen, a series of recognition operations in which the increase · the decrease of the wind speed at each altitude is intuitively imaged using the graph display and the wind speed at each altitude is then grasped specifically using the tabular display, and hence it is possible to speedily and easily perform the analysis of the wind condition.

According to a tenth aspect of the present invention, the graph included in the graph screen shows both of a change of the latest head wind component and a change of the past head wind component at or below the designated altitude in one graph, and the table included in the tabular screen shows the latest head wind component and the past head wind component at or below the designated altitude, whereby the user can grasp the trend of change in the low-level turbulence from the past wind information to predict the condition of the future low-level turbulence, and it becomes easy for the user to intuitively grasp the low-level turbulence by providing the wind information limited to a range at or below the designated altitude in which the occurrence of the disturbance strongly affects the aircraft landing.

According to an eleventh aspect of the present invention, the display control unit causes the display unit to display the warning screen including the landing difficulty level information, the graph screen, and the tabular screen side by side and, in a case where determination is made that the landing difficulty level is high, the display control unit indicates, in the graph screen and the tabular screen, parts corresponding to a wind change correlated with the landing difficulty level and the altitude range in which the wind change occurs by using a display different from that of another part, whereby it is possible to intuitively grasp the wind speed and the altitude range of the wind disturbance of concern at sight.

According to a twelfth aspect of the present invention, the landing decision support system further includes a sensor switching unit that switches between a plurality of the weather sensors to determine the weather sensor that serves as an information provision source for the respective screens according to an instruction from the user or automatically, whereby it is possible to grasp the observation device that provides the currently displayed information, and hence the information becomes effective when a specialist of the weather or a sensor maker monitors the display and, for example, in the case where the displayed wind disturbance information seems abnormal, the information can be used for troubleshooting by which the weather sensor having a problem is found out.

According to a thirteenth aspect of the present invention, the landing decision support system further includes a text conversion unit that converts information included in the screen generated by the screen generation unit into a text format that can be transmitted to equipment installed in the aircraft, whereby it is possible to transmit necessary and sufficient information to the aircraft to perform planning of landing and briefing before takeoff excellently based on the sufficient information even on the aircraft, it is possible to share the information with the user on the aircraft, and the load of the flight dispatcher for organizing the information sent to the aircraft is reduced.

According to a fourteenth aspect of the present invention, the landing decision support system further includes an information generation unit that generates various information items from observation information including the echo intensity data of the observation target acquired by the weather sensor, and the information generation unit has an extraction unit that sets a plurality of three-dimensional regions defined by a predetermined two-dimensional region in a horizontal plane and a predetermined area in a vertical direction in an observation region of the weather sensor and extracts a plurality of values included in each of the three-dimensional regions from the echo intensity data, and an echo summary statistic calculation unit that calculates a summary statistic of the echo intensity data in each of the three-dimensional regions by using the plurality of values extracted by the extraction unit as a population, whereby it is possible to implement a two-dimensional display that utilizes the summary statistic and secure excellent viewability in the display while preventing the failure to detect the local phenomenon.

According to a fifteenth aspect of the present invention, the information generation unit further has a vector calculation unit that calculates a motion vector of the observation target based on information on the summary statistic in each of the three-dimensional regions acquired by the echo summary statistic calculation unit at a plurality of past timings, a vector summary statistic calculation unit that calculates the summary statistic of the motion vector by using a plurality of the motion vectors acquired by the vector calculation unit as the population, and a prediction information calculation unit that calculates a predicted value of the summary statistic of the echo intensity data, based on the summary statistic of the motion vector acquired by the vector summary statistic calculation unit and the summary statistic of the echo intensity data acquired by the echo summary statistic calculation unit, whereby it is possible to generate short-term prediction information having high accuracy without requiring great calculation cost.

According to a sixteenth aspect of the present invention, the landing decision support system includes an information generation unit that generates various information items from observation information acquired by the weather sensor, and the information generation unit has a data processing unit that performs preprocessing on the data on wind directions and the data on wind speeds at the plurality of predetermined altitudes on the landing path acquired by the weather sensor and the bearing data on the runway, and a landing difficulty level estimation unit that estimates the landing difficulty level with a first estimation model by using the model information on the aircraft and a fluctuation range of the flight condition of the aircraft at the plurality of predetermined altitudes outputted by the data processing unit as input information, and the first estimation model is constructed by a nonlinear multivariate analysis method by using flight data of the aircraft that has flown on the landing path as an estimation target and landed and evaluation data obtained by subjective evaluation of the landing difficulty level by a pilot as learning data, whereby it is possible to estimate the landing difficulty level having high usability and highly correlated with the occurrence of an operation trouble or an accident in which the specific landing path and the evaluation data obtained by the subjective evaluation by the pilot are reflected.

According to a seventeenth aspect of the present invention, the landing decision support system includes an information generation unit that generates various information items from observation information acquired by the weather sensor, the information generation unit has a wind disturbance estimation unit, the wind disturbance estimation unit estimates a fluctuation range of the head wind component, a fluctuation range of a cross wind component, and a fluctuation range of a vertical wind component of the wind speed at the plurality of predetermined altitudes with a second estimation model by using data acquired by performing the preprocessing on the data on wind directions and the data on wind speeds at the plurality of predetermined altitudes on the landing path acquired by the weather sensor and the bearing data on the runway as the input information, and the second estimation model is constructed by the nonlinear multivariate analysis method by using the flight data of the aircraft that has flown on the landing path as the estimation target and landed as the learning data, whereby it is possible to estimate the fluctuation range of the head wind component, the fluctuation range of the cross wind component, and the fluctuation range of the vertical wind component of the wind speed that are factors responsible for the fluctuation of the flight condition of the aircraft with high accuracy with the information on the specific landing path reflected therein.

According to an eighteenth aspect of the present invention, the landing decision support system includes an information generation section that generates various information items from observation information acquired by the weather sensor, the information generation unit has a wind disturbance estimation unit, the wind disturbance estimation unit calculates head wind components of the wind speed and the cross wind components of the wind speed at the plurality of predetermined altitudes by performing coordinate transformation by using the data on wind directions and the data on wind speeds at the plurality of predetermined altitudes on the landing path acquired by the weather sensor and the bearing data on the runway as the input information, calculates an altitude change rate of the head wind component and an altitude change rate of the cross wind component at the plurality of predetermined altitudes by performing numerical differentiation on each head wind component and each cross wind component in an altitude direction, and estimates the fluctuation range of the head wind component, the fluctuation range of the cross wind component, and the fluctuation range of the vertical wind component of the wind speed with the second estimation model by using the head wind component, the cross wind component, the altitude change rate of the head wind component, the altitude change rate of the cross wind component, and the altitude as the input information, and the second estimation model is constructed by the nonlinear multivariate analysis method by using the flight data of the aircraft that has flown on the landing path as the estimation target and landed as the learning data, whereby it is possible to estimate the fluctuation range of each component of the wind speed having high accuracy in which the information on the specific landing path is reflected from the data on wind directions and the data on wind speeds at the plurality of predetermined altitudes on the landing path and the bearing data on the runway.

According to a nineteenth aspect of the present invention, the landing decision support system includes an information generation unit that generates the various information items from observation information acquired by the weather sensor, the information generation unit has an aircraft response estimation unit, the aircraft response estimation unit estimates the fluctuation range of the flight condition of the aircraft at the plurality of predetermined altitudes with a third estimation model by using the head wind components and the cross wind components on the landing path at the plurality of predetermined altitudes, and the fluctuation range of the head wind component, the fluctuation range of the cross wind component, and the fluctuation range of the vertical wind component at the plurality of predetermined altitudes as the input information, and the third estimation model is constructed by the nonlinear multivariate analysis method by using the flight data of the aircraft that has flown on the landing path as the estimation target and landed as the learning data, whereby it is possible to estimate the fluctuation range of the flight condition of the aircraft that is an important element in the estimation of the landing difficulty level with high accuracy with the information on the specific landing path reflected therein, and hence it is possible to estimate the landing difficulty level having high usability.

### [Brief Description of Drawings]

[Fig. 1]

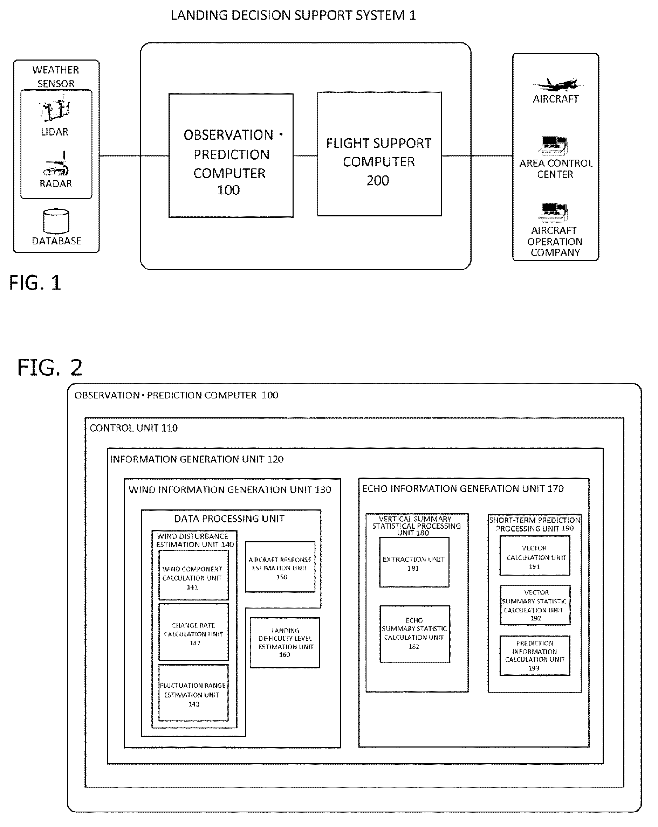

   Fig. 1 is a schematic view showing a configuration of a landing decision support system as an embodiment of the present invention.
[Fig. 2]
   Fig. 2 is a schematic view showing a configuration of an observation · prediction computer.
[Fig. 3]

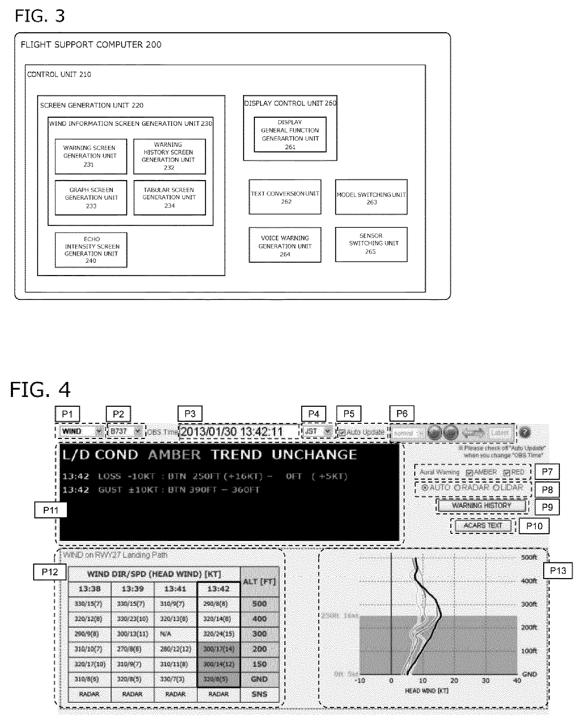

   Fig. 3 is a schematic view showing a configuration of a flight support computer.
[Fig. 4]
   Fig. 4 is an explanatory view showing an example of a wind information screen.
[Fig. 5]

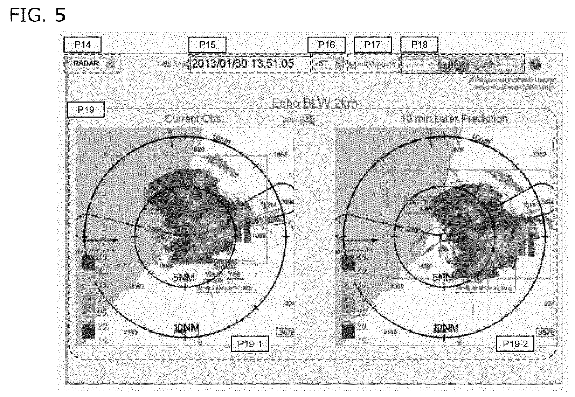

   Fig. 5 is an explanatory view showing an example of a radar echo screen.
[Fig. 6]

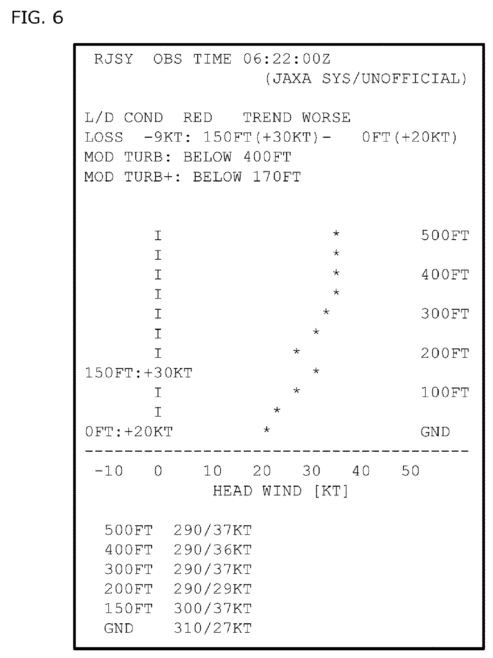

   Fig. 6 is an explanatory view showing an example of an ACARS text conversion output.
[Fig. 7]

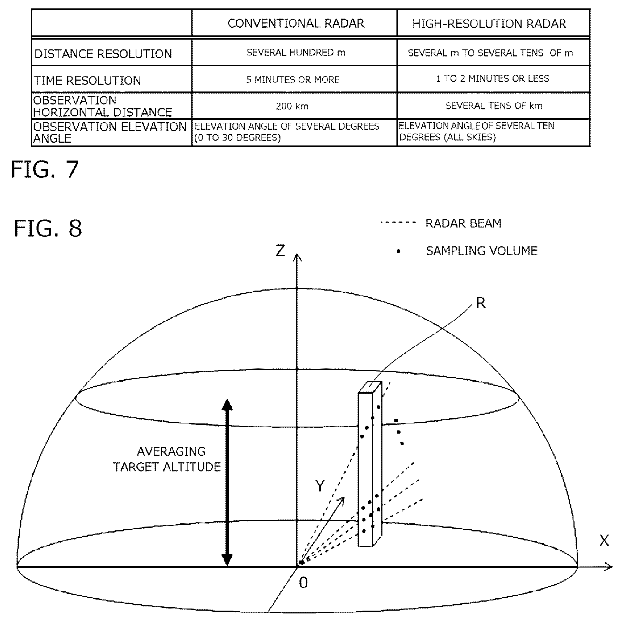

   Fig. 7 is an explanatory view in which performance of a radar of a conventional art is compared with performance of a high-resolution radar.
[Fig. 8]
   Fig. 8 is an explanatory view for explaining a calculation method of a summary statistic by an echo information generation unit.

### [Reference Signs List]

- 1: landing decision support system
- 100: observation · prediction computer
- 110: control unit
- 120: information generation unit
- 130: wind information generation unit
- 140: wind disturbance estimation unit
- 141: wind component calculation unit
- 142: change rate calculation unit
- 143: fluctuation range estimation unit
- 150: aircraft response estimation unit
- 160: landing difficulty level estimation unit
- 170: echo information generation unit
- 180: vertical summary statistical processing unit
- 181: extraction unit
- 182: echo summary statistic calculation unit
- 190: short-term prediction processing unit
- 191: vector calculation unit
- 192: vector summary statistic calculation unit
- 193: prediction information calculation unit
- 200: flight support computer
- 210: control unit
- 220: screen generation unit
- 230: wind information screen generation unit
- 231: warning screen generation unit
- 232: warning history screen generation unit
- 233: graph screen generation unit
- 234: tabular screen generation unit
- 240: echo intensity screen generation unit
- 260: display control unit
- 261: display general function generation unit
- 262: text conversion unit
- 263: model switching unit
- 264: voice warning generation unit
- 265: sensor switching unit

### [Description of Embodiments]

The present invention is a landing decision support system for providing information for supporting a decision of an aircraft landing including a screen generation unit that generates various screens displayed in a display unit, and a display control unit that causes the display unit to display the various screens generated by the screen generation unit, wherein the screen generation unit includes an echo intensity screen generation unit that generates an echo intensity screen, and echo intensity information included in the echo intensity screen is generated based on echo intensity data of an observation target acquired by a weather sensor and displays a horizontal distribution of an echo intensity using a summary statistic of the echo intensity in an area around an airport in a predetermined altitude range. As long as the landing decision support system allows even a general user other than a specialist to easily and accurately read information useful for the decision of the aircraft landing, its specific configuration may be any configuration.

For example, the specific implementation of the weather sensor in the present invention may be any sensor such as a weather radar or a weather lidar as long as the sensor is capable of acquiring wind information.

Hereinbelow, a landing decision support system 1 as an embodiment of the present invention will be described based on Figs. 1 to 8.

The landing decision support system 1 provides information for supporting the decision of the aircraft landing to various users such as a flight dispatcher, a controller, and a pilot and, as shown in Fig. 1, includes an observation · prediction computer 100 that generates various information items, and a flight support computer 200 that causes display units of ground · onboard systems of an area control center and the like to display various screens.

First, the flight support computer 200 will be described based on Figs. 1 to 6.

The flight support computer 200 causes the display units of the ground · onboard systems of the area control center, airlines, and aircrafts, a usual personal computer, and a mobile terminal (smartphone or the like) to display various screens. The flight support computer 200 includes a control unit 210, a transceiver unit, a storage unit, an input unit, an output unit, and an auxiliary storage device, and implements individual units described later by causing the control unit 210 to operate according to software expanded in the storage unit. The control unit 210 is constituted by a CPU and the like, and the storage unit is constituted by a ROM, a RAM, and the like.

As shown in Fig. 3, the control unit 210 has a screen generation unit 220 that generates various screens, a display control unit 260 that causes the display unit to display various screens generated by the screen generation unit 220, a text conversion unit 262, a model switching unit 263, a voice warning generation unit 264, and a sensor switching unit 265.

The screen generation unit 220 has a wind information screen generation unit 230 that generates a wind information screen shown in Fig. 4, and an echo intensity screen generation unit 240 that generates a radar echo screen shown in Fig. 5.

As shown in Fig. 3, the wind information screen generation unit 230 has a warning screen generation unit 231 that generates a warning screen P11, a warning history screen generation unit 232 that generates a warning history screen (not shown), a graph screen generation unit 233 that generates a graph screen P13, and a tabular screen generation unit 234 that generates a tabular screen P12.

As shown in Fig. 3, the display control unit 260 has a display general function generation unit 261 that is in charge of a display general function.

Hereinbelow, individual units and various screens of the flight support computer 200 will be described.

First, the warning screen P11 generated by the warning screen generation unit 231 will be described hereinbelow based on Fig. 4.

First, the warning screen generation unit 231 generates warning information on low-level turbulence, and displays the content of the warning in the form of concise text. Terms used in the text are limited to standard terms and abbreviations used by airmen. In consideration of a flight dispatcher who transmits the text displayed in the warning screen P11 to a pilot by radio, the conditions of a landing difficulty level · low-level turbulence are described in transmittable concise text. How to describe the warning screen P11 will be explained below.

First, in the warning screen P11, attention of a user is attracted by positioning landing difficulty level information as information of which phenomenon can be easily understood at the top. Next, increase · decrease information of head wind having a high priority is described. Next, turbulence and aircraft specification information as detail information are described. In addition, in the warning screen P11, the background color of the screen is black such that the warning can be easily noticed when it is issued. Further, in consideration of noticeability for the user, the warning screen P11 is disposed at a noticeable position of the wind information screen (e.g., upper side).

Next, the content of the warning screen P11 will be specifically described.

First, in the first line from the top in the warning screen P11, "landing difficulty level" is expressed in a plurality of levels (three levels in the present embodiment), and "trend of change in landing difficulty level" is expressed in a plurality of levels (three levels in the present embodiment) such as "L/D COND RED TREND UNCHANGE" (the landing difficulty level is so high that a go-around is expected to be required, and the trend will not change later), "L/D COND AMBER TREND UNCHAGE" (special attention · operation are required due to wind disturbance, and the trend will not change later), or the like.

First, "landing difficulty level" of the warning screen P11 is as follows.

That is, in the first line of the warning screen P11, the result of prediction of the probability of the go-around due to the wind disturbance and the probability of giving a windshear (a sustained significant change in wind direction · wind speed and a change that affects a path angle and an altitude change of an aircraft as a result) warning is displayed in three levels as the landing difficulty level (example: RED: go-around is expected to be required, AMBER: special attention · operation are required due to wind disturbance, GREEN: no problem). With this, it becomes easy to understand the effect of the wind disturbance on the flight. In addition, when "RED", "AMBER", and "GREEN" are displayed in the form of text, the color of the text is caused to match the color meant by the text such that the user can easily understand the condition intuitively (example: when "RED" is written, the color of the text is red). Further, in the warning screen P11, the effect of the low-level turbulence on the aircraft (pitch or roll, path deviation) differs depending on the model, and hence the landing difficulty level is displayed for each model.

Next, the "trend of change in landing difficulty level (trend)" of the warning screen P11 is as follows.

That is, in the first line of the warning screen P11, since a time delay exists between the time of provision of the information on the landing difficulty level and the actual time of the landing, trend information indicative of how the landing difficulty level will change is displayed in three levels (example: BETTER: improving trend, WORSE: worsening trend, UNCHANGE: no change).

The landing difficulty level and the trend of the landing difficulty level are expressed in one sentence. With this, it is possible to intuitively recognize the current status of the landing difficulty level and the future status of the landing difficulty level at sight.

Next, the second line from the top and the subsequent line in the warning screen P11 show information indicative of "increase/decrease of head wind component of wind speed" along a runway direction in a predetermined altitude range and on a landing path (including the runway), "wind disturbance occurrence information (turbulence)" indicative of the occurrence of the wind disturbance and the altitude range of the occurrence of the wind disturbance, or "flight condition information (aircraft specification information)" indicative of the effect of the disturbance on the flight condition of the aircraft such as "11:25 LOSS-9KT : BTN 290FT (+24KT) - 200FT (+15KT) (decrease of head wind of -9KT between 290 FT and 200 FT at 11:25)", "11:25 GUST ±10KT : BELOW 140FT (turbulence of ±10KT below 140 FT at 11:25)", and "11:24 SEVERE ROLL : BELOW 150 FT (specification fluctuation of roll angle is expected to occur below 150 FT at 11:24)".

First, "increase/decrease of head wind component" of the warning screen P11 is as follows.

The increase/decrease of the head wind component displays information on the increase · the decrease of the head wind in the case where the landing difficulty level is high. In addition, the increase/decrease of the head wind component also displays the time when the information is observed and the altitude range where the increase/decrease thereof is present together. As the display method of the altitude range, the altitude range is displayed in decreasing order of altitude in consideration of the landing process of the aircraft. Herein, usually, when an article is written, 5W1H ("when", "where", "who", "what", "why", and "how") is used as a basis. However, in the arrangement of the text of the present embodiment, the text is generated in consideration of "recognition", "determination", and "action" that are considered to be one of models of recognition processes of a human being. That is, in the arrangement of the text, after information on "when", the condition of the head wind (increase (GAIN) or decrease (LOSS)) as information that should attract the first attention of the user (especially the pilot) is positioned at the top, then detail numerical values of the phenomenon (information indicative of KT of the increase/decrease value of the head wind (example: values such as -9 KT and +8 KT), and indicative of "where" the increase/decrease occurs) are positioned. With regard to the information indicative of "where" the increase/decrease occurs, the information is expressed in the form of the altitude range (example: BTN 290 FT (+24 KT) - 200 FT (+15 KT)) instead of the position of the occurrence.

With this, it becomes possible to perform information provision suitable for a series of the recognition processes of the pilot such as attracting the attention of the pilot to cause the pilot to "recognize" the situation and then causing the pilot to "determine" how the pilot flies the aircraft to cope with the situation (example: how the pilot increases or decreases a thrust operation at which altitude), and this is considered to contribute to an improvement in situation recognition.

Next, "disturbance occurrence information (turbulence)" of the warning screen P11 is as follows.

That is, the disturbance occurrence information is displayed in the case where the turbulence (is a phenomenon that is caused by rapid irregular motion of air and affects the aircraft as a sudden pitch or roll; the turbulence does not normally exert a significant effect that changes the path angle of the aircraft) occurs. The information is displayed together with the occurrence time and the presence altitude.

Next, "flight condition information (aircraft specification information)" of the warning screen P11 is as follows.

That is, in the case where the landing difficulty level is high, the aircraft specification (example: attitude, climb/descent rate) information with which the landing difficulty level is correlated is displayed.

Next, the graph screen P13 generated by the graph screen generation unit 233 will be described hereinbelow based on Fig. 4.

First, the graph screen generation unit 233 generates the head wind that is expressed in the form of a graph having the vertical axis as the altitude and the horizontal axis as the head wind. In addition, the vertical axis is set as 0 KT such that the increase/decrease of the head wind can be seen at sight. Further, the altitude represented by the graph screen generation unit 233 is the altitude range extracted by a method described later (example: below 500 ft, at intervals of 10 ft). Additionally, information in the past several minutes is displayed together with the observation time such that the trend of the head wind can be understood. In the graph screen generation unit 233, when the past information is displayed in the graph, consideration is given such that the information at the observation time and the information at the past time can be clearly distinguished from each other. As a specific example, the following display method is used. That is, the information at the observation time and the information at the past time are distinguished from each other by changing the color of the information. Alternatively, the same color is used for the head wind information at the observation time and the head wind information at the past time, and the color of the line is made thinner as the information is older. Alternatively, the information at the observation time and the information at the past time are distinguished from each other by changing the type of the line (example: solid line, broken line). Alternatively, in the case where the landing difficulty level is high (example: the landing difficulty level is "RED" or "AMBER"), the altitude range in which the significant wind change correlated with the landing difficulty level occurs is emphasized by using the color set according to the difficulty level (example: red in the case of "RED") . With this, it becomes possible to intuitively grasp the altitude range of the wind disturbance of concern. In addition, in the case where the landing difficulty level is high (example: when the landing difficulty level is "RED" or "AMBER"), the altitude of concern and the numerical value of the head wind are shown at the side of the graph. With this, it becomes possible to intuitively grasp the value of the head wind and becomes easy to understand the effect of the wind disturbance on the flight. Further, the above numerical value has the text color set according to the difficulty level (example: red in the case of "RED"). By adopting this display method, it is possible to understand the altitude range of concern and the actual numerical value simultaneously. In addition, in the case where a plurality of wind observation sensors (radar, lidar, and the like) are present, a sensor having a large wind calculation area is automatically selected and the display is performed.

Next, the tabular screen P12 generated by the tabular screen generation unit 234 will be described hereinbelow based on Fig. 4.

First, in the tabular screen P12, the altitude is displayed in rows, and the wind direction · the wind speed and the head wind information on the flight path (including the wind on the runway) for the past several minutes from the observation time are displayed in columns in the form of a table. With regard to the tabular display, the display of the table of the wind direction · the wind speed and the table of the head wind takes a large space for layout, and hence the numerical values of the wind direction · the wind speed and the head wind are put in cells of the same table. Specifically, they are displayed in the form of wind direction/wind speed (head wind) (example: 350/05 (+10) : the wind direction is the direction of 350 degrees and the wind speed is 5 KT, the head wind is +10 KT) · With this, it becomes possible to easily read the relationship between them. In addition, when the wind direction · the wind speed and the head wind component are displayed in numerical values, the value of the wind direction is rounded to the nearest multiple of 10, and is displayed with magnetic bearing that is normally used in the flight of the aircraft. Further, + is added to the numerical value of the head wind in the case of the increase, and - is added to the numerical value thereof in the case of the decrease such that the increase · the decrease can be understood at sight. In addition, in the case where the landing difficulty level is high (example: the landing difficulty level is "RED" or "AMBER"), cells having the altitude range in which and the time at which the significant wind change correlated with the landing difficulty level occurs are emphasized by using the color set according to the difficulty level (example: red in the case of "RED") · With this, it becomes possible to intuitively grasp the altitude range of the wind disturbance of concern. In addition, in the case where a plurality of wind observation sensors (radar, lidar, and the like) are present, a sensor having a large wind calculation area is automatically selected, and the display is performed. In addition, the observation source (example: lidar, radar) is displayed for the display of the wind direction · the wind speed and the head wind component on the flight path.

Next, the warning history screen generation unit 232 will be described hereinbelow based on Fig. 4.

In the present embodiment, a function of displaying the trend of each of the landing difficulty level and the wind direction · the wind speed (Warning History function) is provided such that the trend of each of the landing difficulty level and the wind direction · the wind speed of one day can be grasped. When the user selects the "Warning History" function by selecting P9 in Fig. 4, the warning history screen is displayed in another screen. With this, it becomes possible for the user to empirically have the periodicity of the warning or the wind direction · the wind speed. In the warning history screen, the landing difficulty level in the past several hours is displayed such that the landing difficulty level of one day can be grasped. In addition, the wind direction · the wind speed in the past several hours are displayed such that the trend of each of the wind direction · the wind speed of one day can be grasped. Further, as the display method, the landing difficulty level, the wind direction, and the wind speed are positioned at upper, middle, and lower parts, respectively. The user can select the length of the past hours of the information display (example: 1 hour, 3 hours, 6 hours).

Next, the echo intensity screen P19 generated by the echo intensity screen generation unit 240 will be described hereinbelow based on Fig. 5.

First, the echo intensity screen P19 extensively displays a radar echo at the observation time (P19-1 in Fig. 5) and a radar echo prediction a designated time period later (P19-2 in Fig. 5). Herein, the designated altitude and range of the radar echo are extracted by a method described later. Thus, by displaying the radar echo at the observation time and the radar echo prediction the designated time period later, it becomes possible to easily recognize the state of the echo on the aircraft at each of a current time and a landing time.

In the echo intensity screen P19, the horizontal distribution of the radar echo is displayed by causing one summary statistic such as the maximum value or the mean value of the echo intensity at or below the designated altitude plane acquired by the echo information generation unit 170 to represent the radar echo at or below the designated altitude plane. In addition, the prediction of the radar echo horizontal distribution the designated time period later is displayed such that the radar echo horizontal distribution can be used for a landing timing decision. The reason why the prediction information the designated time period later is displayed is that it takes time before the aircraft actually starts approach and land after the aircraft reaches an area over an airport. By providing the current display and the prediction display the designated time period later, it becomes possible to determine the landing timing. In the display of the horizontal distribution of the radar echo, the effective area of the observation or the prediction is displayed.

In the echo intensity screen P19, the intensity of the radar echo is expressed by using colors. Further, in addition to the current display of the radar echo, the prediction of the radar echo the designated time period later is displayed in one screen. By displaying them in one screen, it becomes possible to easily compare the current condition of the radar echo with the condition of the radar echo at an estimated landing time. In addition, there is used a display method that superimposes the radar echo on a map showing an airport and takeoff and landing paths such that it is possible to intuitively understand where the echo exists on the landing path (where rainfall · snowfall exist). In addition, in the echo intensity screen P19, the position of the aircraft present in an area around the airport is superimposed and displayed. By superimposing the position of the aircraft, it becomes possible to grasp the effect of the echo on the flight more intuitively. Note that objects displayed in the echo intensity screen P19 such as the airport, the takeoff and landing paths, and the aircraft may be arbitrarily determined.

Herein, the screens provided by the flight support computer 200 are, roughly speaking, the wind information screen shown in Fig. 4 and the radar echo screen shown in Fig. 5, and the user can use the two screens by switching between the wind information screen and the radar echo screen, or can also use only one of the screens that is necessary.

Next, the display general function generation unit 261 will be described hereinbelow based on Figs. 4 and 5.

First, the display general function generation unit 261 has a function of switching between the observation time of Japan standard time and the observation time of world standard time displayed in P3 in Fig. 4 and P15 in Fig. 5 by selecting P4 in Fig. 4 and P16 in Fig. 5. With this, it becomes possible to cope with other aviation weather data that is often provided based on world standard time. In addition, in the case where the designated time period or more has elapsed from the observation time (in the case where a time switching function described later does not operate or is stopped), the display general function generation unit 261 has a function of changing the display color of the observation time or changing the background color. With this, it becomes possible to call the attention of the user to a fact that an automatic update function does not operate or is stopped and, in the case where the automatic update function does not operate, there is a possibility that an abnormality of the wind observation sensor can be found. In addition, the display general function generation unit 261 has a function of allowing an animation display of past information such that trend information of the wind or the radar echo can be grasped by operating P6 in Fig. 4 or P18 in Fig. 5. With this, it becomes possible to grasp the trend information of the wind or the radar echo and, by allowing animation of the aircraft position in the radar echo screen, it becomes possible to grasp the relationship between the echo and the aircraft position more intuitively. Further, the display general function generation unit 261 has a function of allowing the animation of the aircraft position in the echo intensity screen P19 to facilitate the grasp of the relationship between the echo and the aircraft position. In addition, the display general function generation unit 261 has a function of switching and display the time such that the trend information of the wind or the radar echo can be grasped. Further, the display general function generation unit 261 has an automatic update function of the display by operating P5 in Fig. 4 or P17 in Fig. 5. In addition, the display general function generation unit 261 has a function of allowing the choice of the user in which the automatic update function is not used when the animation or the time switching function is used and the automatic update function is used when the display is returned to the display of the current time. Further, the display general function generation unit 261 has a help function having the description of the explanation of the display. In addition, the display general function generation unit 261 has a function of switching the lidar or radar screen by operating P1 in Fig. 4 or P14 in Fig. 5.

Next, the text conversion unit 262 will be described hereinbelow based on Figs. 4 and 6.

The text conversion unit 262 converts the graph and the text displayed in the wind information screen into an ACARS (Aircraft Communication Addressing and Reporting System) text format allowing transmission to the aircraft, as shown in Fig. 6, in order to transmit the graph information · the text information of the head wind, the landing difficulty level, the wind direction · wind speed information at each altitude to the aircraft by using a data link. The ACARS text conversion is performed by selecting P10 in Fig. 4.

Next, the model switching unit 263 will be described hereinbelow based on Fig. 4.

The model switching unit 263 switches the target model of the landing difficulty level information because the landing difficulty level displayed in each of various screens (the warning screen P11, the graph screen P13, the tabular screen P12, and the warning history screen) differs depending on the model. The switching of the model is performed by selecting P2 in Fig. 4.

Next, the voice warning generation unit 264 will be described hereinbelow based on Fig. 4.

The voice warning generation unit 264 gives a warning by voice in the case where the landing difficulty level is high (when the landing difficulty level reaches "RED" or "AMBER" set by selecting P7 in Fig. 4). In addition, the voice warning generation unit 264 changes the content of the voice according to the landing difficulty level and presents it. The content of the voice is changed in order to cause the user to notice the difference between the individual landing difficulty levels. Further, the voice warning generation unit 264 changes the quality of the voice (example: male voice, female voice) according to the landing difficulty level. In addition, in order to attract the attention of the user, the voice warning generation unit 264 emits the landing difficulty level (example: RED, AMBER) as the first voice (example: in the case of RED: RED, RED, Landing Condition RED, in the case of AMBER: AMBER, AMBER, Landing Condition AMBER). In addition, a selection function is provided in the screen such that the user can select whether or not to emit the warning sound (example: ON only in the case of RED, OFF in the case of AMBER).

Next, the sensor switching unit 265 will be described hereinbelow based on Fig. 4.

The sensor switching unit 265 switches between a plurality of the weather sensors (lidar, radar) to determine the weather sensor that serves as the information provision source for various screens according to an instruction from the user or automatically (automatic switching). The switching of the sensor switching unit 265 is performed by selecting P8 in Fig. 4.

Next, a determination method of information displayed in various screens will be described hereinbelow.

Herein, since the altitude range and the distance range of concern differ depending on the airport, the altitude range and the range of concern at the airport are extracted from wind observation data, specification data of the aircraft, and questionnaires of the pilot · the flight dispatcher. Specifically, the extraction is as follows.

First, time when the low-level turbulence is severe at the corresponding airport is selected. In addition, the wind observation data is acquired by using wind observation devices (example: radar, lidar) at the time. Further, the specification data of the aircraft at the time when the data is acquired is acquired. In addition, a questionnaire is distributed to a pilot flying to the airport at the time when the data is acquired. That is, the pilot is asked to write down the altitude range in which a significant wind change has occurred, subjective wind speed that the pilot has felt, and subjective evaluation of the landing difficulty level. In addition, the pilot is asked to write down the altitude range [ft] of the wind information that the pilot desires to acquire. Further, the pilot is asked to write down the distance range · the altitude to be covered by the radar echo. Additionally, the pilot is asked to write down the position of a cumulonimbus and its cloud top altitude. In addition, the pilot is asked to write down information that the pilot desires to acquire on the aircraft, the timing of acquisition of the information, and desirable transmission means. A questionnaire is distributed to the flight dispatcher at the airport at the time when the data is acquired. That is, the flight dispatcher is asked to write down information that the flight dispatcher desires to acquire on the ground. Subsequently, from the result of the questionnaires of the pilot and the flight dispatcher, the altitude range in which the significant wind change has occurred is extracted. In addition, as the result of the altitude range and "the altitude (ft) of the wind information that the pilot desires to acquire", the altitude range of the low-level turbulence provided by the device is determined from the wind observation data and flight data. Further, from the results of "the distance range · the altitude to be covered" and "the position of a cumulonimbus and its cloud top altitude", the distance range of the radar echo provided by the device is determined. In addition, from the results of "information that the pilot desires to acquire on the aircraft" of the pilot questionnaire and "information that the flight dispatcher desires to acquire on the ground" of the flight dispatcher questionnaire, the information provision content is selected. Further, from the result of "desirable transmission means" of the pilot questionnaire, information to be transmitted by radio and information to be transmitted by the ACARS are organized, and the information to be transmitted by radio is reflected in the warning screen P11, and the information to be transmitted by the ACARS is reflected in the text conversion unit 262.

Next, the update interval of various information items will be described hereinbelow.

That is, in the present embodiment, since information on changeable weather is provided, the update interval is set to 1 minute to 2 minutes. As the system for providing information on windshear, there is a system having the update interval of 1 minute, but there is no system having the update interval of the radar echo information of 1 minute to 2 minutes. By having this update interval, the interval is close to the update interval of a pilot report called PIREP, and an affinity is considered to be increased.

Next, the observation · prediction computer 100 that generates various information items will be described based on Figs. 2, 7, and 8.

The observation · prediction computer 100 performs data processing of observation information acquired by the weather sensor to generate various information items. The observation prediction computer 100 includes a control unit 110, a transceiver unit, a storage unit, an input unit, an output unit, and an auxiliary storage device, and implements individual units described later by causing the control unit 110 to operate according to software expanded in the storage unit. The control unit 110 is constituted by a CPU and the like, and the storage unit is constituted by a ROM, a RAM, and the like.

The control unit 110 has an information generation unit 120 that generates various information items, and the information generation unit 120 has a wind information generation unit 130 that generate wind information and an echo information generation unit 170 that generates echo information.

As shown in Fig. 2, the wind information generation unit 130 has a data processing unit that includes a wind disturbance estimation unit 140 and an aircraft response estimation unit 150, and a landing difficulty level estimation unit 160 that calculates the landing difficulty level for the aircraft.

As shown in Fig. 2, the wind disturbance estimation unit 140 has a wind component calculation unit 141, a change rate calculation unit 142, and a fluctuation range estimation unit 143. The content of processing by individual units of the wind disturbance estimation unit 140 is as follows.

First, the wind component calculation unit 141 calculates the head wind components of the wind speed along the runway direction and cross wind components of the wind speed along a lateral direction orthogonal to the runway direction at a plurality of predetermined altitudes by performing coordinate transformation by using data on wind directions and data on wind speeds at the plurality of predetermined altitudes on the landing path acquired by the weather sensor and bearing data on the runway as input information.

Next, the change rate calculation unit 142 calculates the altitude change rate of the head wind component and the altitude change rate of the cross wind component by performing numerical differentiation on each head wind component and each cross wind component acquired by the wind component calculation unit 141 in the altitude direction.

Next, the fluctuation range estimation unit 143 estimates the fluctuation range of the head wind component, the fluctuation range of the cross wind component, and the fluctuation range of a vertical wind component on the landing path at the same altitude as the altitude of an input with a second estimation model by using the head wind component, the cross wind component, the altitude change rate of the head wind component, the altitude change rate of the cross wind component, and the altitude as input information. In the fluctuation range estimation unit 143, since one of main factors of the generation of a relatively small wind speed fluctuation having a change scale of the order of 10 to 100 m is an altitude change (shear) of the wind speed, the altitude change rates of the head wind component and the cross wind component are used as the input information.

The above second estimation model is generated by a nonlinear multivariate analysis method such as neutral network, Bayesian network, or support vector machine based on the flight data of the aircraft that has flown on the landing path as an estimation target and landed. The specific content of the second estimation model is as follows.

First, the fluctuation range of the wind speed component as the output of the second estimation model is used as the input of the aircraft response estimation unit 150, and hence information on the wind disturbance having a change scale of the order of 10 to 100 m that fluctuates a flight attitude needs to be included. However, a typical wind observation sensor having a spatial resolution of the order of 100 m cannot observe the information directly. Accordingly, learning data used in the construction of the second estimation model is generated by the following method.

The learning data is generated based on the flight data of the aircraft that has flown on the landing path as the estimation target and landed. It is desirable to prepare as many examples of the flight data as possible such as 100 examples or more. As the flight data, for example, data of a flight data recorder (FDR) mounted in typical passenger planes can be used. Generally, airlines keep FDR data for about one year, and it is easy to secure the number of data items. Time history information of the wind having three components of the head wind · the cross wind · the vertical wind that the aircraft has received (hereinafter referred to as flight data calculation wind) can be calculated from the flight data (see NPL 3). The flight data of the aircraft is usually recorded at a rate of about 1 to 10 Hz and, when consideration is given to the fact that the ground speed during a normal landing is about 60 m/s, the spatial resolution of the wind information based on the flight data recorded at the rate of, e.g., 2 Hz is about 30 m, and wind data of the three components calculated from the flight data sufficiently includes the information of the small wind disturbance (the change scale of the order of 10 to 100 m) that fluctuates the flight attitude. In the learning data, the input of the estimation model corresponding to the output of the existing wind observation sensor such as the radar or the lidar is generated by performing a moving average on the flight data calculation wind with an interval (example: about 2 to 3 seconds in the case of the spatial resolution of 100 to 200 m) that matches the spatial resolution of the wind observation sensor (the order of 100 m) . In the learning data, each of the wind fluctuation ranges of the three components of the head wind, the cross wind, and the vertical wind serving as the output of the estimation model is calculated as a standard deviation around the moving average value of the flight data calculation wind. The moving average for the calculation of the standard deviation is performed by using the interval (example: about 2 to 5 seconds in the case of a normal large passenger plane) that mainly represents the wind speed fluctuation by the wind disturbance (the change scale of the order of 10 to 100 m) that fluctuates the flight attitude.

Next, the content of the processing of the aircraft response estimation unit 150 will be described hereinbelow. The aircraft response estimation unit 150 estimates the fluctuation range of the flight condition (flight specification) of the aircraft at the same altitude as that of an input with a third estimation model set for each landing path and each model of the aircraft by using the head wind components and the cross wind components on the landing path at the plurality of altitudes acquired by the wind component calculation unit 141, the fluctuation range of the head wind component, the fluctuation range of the cross wind component, and the fluctuation range of the vertical wind component on the landing path at the plurality of altitudes acquired by the fluctuation range estimation unit 143, and the information on the model of the aircraft as input information.

The above third estimation model is generated by the nonlinear multivariate analysis method such as neutral network, Bayesian network, or support vector machine based on the flight data of the aircraft of the model as the estimation target that has flown on the landing path as the estimation target and landed. The specific content of the third estimation model is as follows.

First, an air speed , an attitude (roll, pitch), vertical · lateral accelerations, a climb/descent rate, and a steering amount that are highly correlated with the difficulty level of piloting are appropriate as the flight specification serving as the estimation target of the third estimation model, but the flight specification is not limited thereto. In order to consider flight characteristics that differ depending on the model, the estimation model is constructed for each model. The fluctuation range of the flight specification as the output of the third estimation model is used as the input of the landing difficulty level estimation unit 160, and hence the estimation is performed such that fluctuation information of the flight specification in a frequency band highly correlated with the difficulty level of piloting is included. Accordingly, the leaning data used for the construction of the third estimation model is generated by the following method.

The leaning data is generated based on the flight data of the aircraft of the model as the estimation target that has flown on the landing path as the estimation target and landed. Herein, it is desirable to prepare as many examples of the flight data as possible such as 100 examples or more, and it is especially desirable to prepare the flight data involving the piloting by a large number of pilots in order to reflect piloting characteristics of the pilot averagely. In the leaning data, the wind data serving as the input of the estimation model is generated from the flight data by the same method as that of the output generation of the wind disturbance estimation unit 140. In the leaning data, the fluctuation range of the flight specification serving as the output of the estimation model is calculated as the standard deviation around the moving average value of the flight data corresponding to the flight specification as the estimation target (the flight data usually includes the record of the flight specification as the estimation target). The moving average for the calculation of the standard deviation is performed by using the interval (example: about 2 to 4 seconds in the case of a normal large passenger plane) that mainly represents the fluctuation of the flight specification highly correlated with the difficulty level of piloting.

Next, the content of the processing of the landing difficulty level estimation unit 160 will be described hereinbelow. The landing difficulty level estimation unit 160 calculates the landing difficulty level that is divided into a plurality of classifications (example: three levels of low, middle, and high in the difficulty level) with a first estimation model set for each landing path and each model of the aircraft by using the information on the model of the aircraft and the fluctuation range of the flight condition of the aircraft at the plurality of altitudes acquired by the aircraft response estimation unit 150 as input information.

The first estimation model is generated by the nonlinear multivariate analysis method such as neutral network, Bayesian network, or support vector machine based on the flight data of the aircraft of the model as the estimation target that has flown on the landing path as the estimation target and landed, and evaluation data obtained by the subjective evaluation of the landing difficulty level by the pilot. The specific content of the first estimation model is as follows.

First, the learning data of the first estimation model is generated based on the flight data of the aircraft of the model as the estimation target that has flown on the landing path as the estimation target and landed, and the evaluation data obtained by the subjective evaluation of the landing difficulty level by the pilot. Herein, it is desirable to prepare as many examples of the flight data as possible such as 100 examples or more, and it is especially desirable to prepare the flight data involving the piloting by a large number of pilots in order to reflect piloting characteristics of the pilot averagely. In addition, it is also desirable to prepare as many examples of the evaluation data as possible such as 100 examples or more. Note that the subjective evaluation by the pilot is performed with the same classification as that of the output of the estimation model. In the learning data, the fluctuation range of the flight specification of the aircraft serving as the input of the estimation model is generated from the flight data by the same method as that of the output generation of the aircraft response estimation unit 150. In the learning data, subjective evaluation data of the pilot is used for the landing difficulty level serving as the output of the estimation model. The subjective evaluation data can be collected by, e.g., conducting a questionnaire survey of the pilot for a predetermined time period.

Next, the echo information generation unit 170 will be described hereinbelow. As shown in Fig. 2, the echo information generation unit 170 has a vertical summary statistical processing unit 180 that calculates the summary statistic of the echo intensity data included in the observation information by the weather sensor, and a short-term prediction processing unit 190 that calculates a predicted value of the summary statistic of the echo intensity data 10 minutes to 20 minutes later.

As shown in Fig. 3, the vertical summary statistical processing unit 180 has an extraction unit 181 that extracts a plurality of values included in each of a plurality of three-dimensional regions R set in the observation region of the weather sensor, and an echo summary statistic calculation unit 182 that calculates the summary statistic of the echo intensity data in each three-dimensional region R by using the plurality of values extracted by the extraction unit 181 as a population. The specific content of the processing by the vertical summary statistical processing unit 180 is as follows.

First, as shown in Fig. 8, the extraction unit 181 extracts the plurality of values included in ach of the plurality of the three dimensional regions R set in the observation region of the weather sensor. The three-dimensional region R is defined by an arbitrarily set two-dimensional region in a horizontal plane and an arbitrarily set area in a vertical direction.

Herein, specific setting of the observation region and the three-dimensional region R in the present embodiment is as follows. First, the observation region of the weather sensor is set in an area at a radius of 10 nautical miles of the airport in a horizontal direction from the viewpoint of providing effective information for the decision of the landing timing of the aircraft. The above two-dimensional region that defines the three-dimensional region R is set using a rectangular region that is set so as to have each side having a length of not more than 100 m such as several meters to several tens of meters from the viewpoint of securing excellent viewability of the display based on the information acquired by the vertical summary statistical processing unit 180 while preventing failure to detect a local rainfall echo. In addition, the above area in the vertical direction is set in an area at or below the altitude of 2 km from the viewpoint of providing effective information for the decision of the landing timing. Note that the specific setting of the above observation region and the above three-dimensional region R is not limited to the above setting, and they may be arbitrarily set according to the embodiment.

As shown in Fig. 7, as the weather sensor in the present embodiment, there is used a high-resolution radar capable of volume scanning of an area having a radius of several tens of kilometers that is effective for airport weather observation in a short time period (1 to 2 minutes) with a high resolution (the order of several to several tens of meters). According to such a high-resolution radar, it is possible to extract values having the sufficient number of samples that can be used as the population of the summary statistic from the three-dimensional region R set as described above.

Next, the echo summary statistic calculation unit 182 calculates the summary statistic of the echo intensity data in each three-dimensional region R by using the plurality of values extracted from each three-dimensional region R by the extraction unit 181 as the population. Herein, in the present embodiment, from the viewpoint of providing echo information that can strongly affect the flight of the aircraft, the maximum value of the echo intensity data is calculated by the echo summary statistic calculation unit 182, but the summary statistic calculated by the echo summary statistic calculation unit 182 is not limited to the maximum value, and may be arbitrarily determined according to the embodiment.

Next, the short-term prediction processing unit 190 will be described. The short-term prediction processing unit 190 calculates the predicted value of the summary statistic of the echo intensity data 10 minutes to 20 minutes later. As shown in Fig. 2, the short-term prediction processing unit 190 has a vector calculation unit 191, a vector summary statistic calculation unit 192, and a prediction information calculation unit 193. The specific content of the processing by the short-term prediction processing unit 190 is as follows.

First, the vector calculation unit 191 calculates a motion vector of the observation target based on information on the summary statistic in each three-dimensional region R acquired by the echo summary statistic calculation unit 182.

Next, the vector summary statistic calculation unit 192 calculates the summary statistic of the motion vector by using a plurality of the motion vectors acquired by the vector calculation unit 191 as the population. Herein, in the present embodiment, a median or a mean is used as the summary statistic calculated by the vector summary statistic calculation unit 192, but the summary statistic calculated by the vector summary statistic calculation unit 192 is not limited to the means or the median, and may be determined according to the embodiment.

Next, the prediction information calculation unit 193 calculates the predicted value of the summary statistic of the echo intensity data 10 minutes to 20 minutes later based on the summary statistic of the motion vector acquired by the vector summary statistic calculation unit 192 and the summary statistic of the echo intensity data acquired by the echo summary statistic calculation unit 182. Herein, in the present embodiment, the predicted value 10 minutes to 20 minutes later is calculated as described above, but the specific content of the predicted value is not limited thereto.

In the landing decision support system 1 of the present embodiment obtained in this manner, the screen generation unit 220 includes the echo intensity screen generation unit 240 that generates the echo intensity screen P19, and the echo intensity information included in the echo intensity screen P19 is generated based on the echo intensity data of the observation target acquired by the weather sensor and displays the horizontal distribution of the echo intensity using the summary statistic of the echo intensity in the area around the airport in the predetermined altitude range, whereby it is possible to determine the landing timing capable of avoiding visibility interference with the provision of the echo intensity information, it is possible to secure excellent viewability in the display while preventing the failure to detect the local phenomenon and allow the user to intuitively grasp the echo intensity without requiring specialization in meteorology or the like by performing the display of the echo intensity by using the summary statistic, and it is possible to display a subtle echo such as a small echo that has just occurred by limiting the display of the echo to the area around the airport.

In addition, the latest echo intensity information and the prediction information of the future echo are displayed side by side in the echo intensity screen P19, whereby it becomes possible to easily compare the current condition of the radar echo with the condition of the radar echo at the time when the aircraft is expected to land actually so that perspicuity is enhanced and it becomes possible to excellently determine the landing timing.

Further, the echo intensity screen P19 displays the information on echo intensity at or below the altitude of 2 km so as to superimpose the information on echo intensity on the map of the area around the airport indicative of the positions of the airport, the landing path, and other aircrafts, whereby it is possible to intuitively grasp the effect of the echo on the flight of the aircraft, and the echo intensity screen P19 is updated at intervals of 1 minute to 2 minutes, whereby it is possible to cope with the changeable weather condition, the update interval becomes close to the update interval of the pilot report called PIREP, and the affinity is enhanced.

In addition, in the case where the radar echo screen is displayed on the aircraft (example: displayed in a tablet by using the Internet, displayed in EFB (Electronic Flight Bag) by using the data link), it becomes possible for the pilot to make the landing timing decision on the aircraft, and it is hoped that a contribution to improvements in in-service rate and safety is made.

Further, the screen generation unit 220 includes the warning screen generation unit 231 that generates the warning screen P11 including the landing difficulty level information indicative of the landing difficulty level for the aircraft, and the landing difficulty level information is generated based on the data on wind directions and the data on wind speeds at the plurality of predetermined altitudes on the landing path acquired by the weather sensor, the bearing data on the runway, and the information on the model of the aircraft, whereby even a general user such as the flight dispatcher or the pilot who does not have technical skills of meteorology or the like can easily and accurately read the information deeply correlated with the decision of the aircraft landing. In addition, conventionally, the information to be transmitted to the aircraft by the flight dispatcher has not been organized and the method in which the information to be transmitted is determined using the experience and knowledge of the flight dispatcher from various display information items and is provided to the aircraft has been adopted. However, by providing the warning screen P11, it becomes possible to understand the warning content and the content to be transmitted to the aircraft at sight, which contributes to an improvement in the situation awareness of the user and a reduction in mental workload.

In addition, the landing difficulty level information includes the latest landing difficulty level for the aircraft and the trend information indicative of the trend of change in the landing difficulty level, whereby it is possible to acquire the information at the time when the aircraft actually starts the approach and lands and grasp the trend of change in the landing difficulty level at sight so that the decision of the landing timing is facilitated.

Further, the warning screen P11 includes the information indicative of the increase/decrease of the head wind component of the wind speed along the runway direction in the predetermined altitude range on the landing path, the disturbance occurrence information indicative of the occurrence of the wind disturbance and the altitude range in which the wind disturbance has occurred, and the flight condition information indicative of the effect of the disturbance on the flight condition of the aircraft, whereby it is possible to grasp the wind disturbance to which attention should be paid and the effect on the flight condition without requiring expertise of meteorology or the like so that it is possible to easily and adequately plan the policy of future piloting.

In addition, the screen generation unit 220 further has the warning history screen generation unit 232 that generates the warning history screen including the information included in the past warning screen P11, whereby it is possible to grasp the trend of the warning content from the past information so that the decision of the landing timing is facilitated and it is possible to empirically grasp the periodicity of the warning content from the past information.

Further, the landing difficulty level information is generated for each model of the aircraft, whereby it is possible to provide the landing difficulty level information having high accuracy in which the characteristics of the model of the aircraft are reflected, and the landing decision support system 1 further has the model switching unit 263 that switches the target model of the landing difficulty level information that the display unit is caused to display according to the request from the user, whereby it becomes easy to perform a comparison between the models and the comparison can be used as reference information concerning the model of the aircraft to be operated in the airport.

In addition, the screen generation unit 220 includes the graph screen generation unit 233 that generates the graph screen P13 including the graph indicative of the change of the head wind component of the wind speed along the runway direction on the landing path relative to the altitude, and the tabular screen generation unit 234 that generates the tabular screen P12 including the table indicative of the head wind component of the wind speed at each predetermined altitude on the landing path, the graph included in the graph screen P13 and the table included in the tabular screen P12 are generated based on the data on wind directions and the data on wind speeds at the plurality of predetermined altitudes on the landing path acquired by the weather sensor, and the display control unit 260 causes the display unit to display the graph screen P13 and the tabular screen P12 side by side, whereby it becomes possible to perform, in one screen, a series of recognition operations in which the increase the decrease of the wind speed at each altitude is intuitively imaged using the graph display and the wind speed at each altitude is then grasped specifically using the tabular display, and hence it is possible to speedily and easily perform the analysis of the wind condition.

Further, the graph included in the graph screen P13 shows both of the change of the latest head wind component and the change of the past head wind component at or below the altitude of 500 ft in the same graph, and the table included in the tabular screen P12 shows the latest head wind component and the past head wind component at or below the altitude of 500 ft, whereby the user can grasp the trend of change in the low-level turbulence from the past wind information to predict the condition of the future low-level turbulence, and it becomes easy for the user to intuitively grasp the low-level turbulence by providing the wind information limited to the range at or below 500 ft in which the occurrence of the disturbance strongly affects the aircraft landing.

In addition, the display control unit 260 causes the display unit to display the warning screen P11 including the landing difficulty level information, the graph screen P13, and the tabular screen P12 side by side and, in the case where it is determined that the landing difficulty level is high, the display control unit 260 indicates parts corresponding to the wind change correlated with the landing difficulty level and the altitude range in which the wind change occurs in the graph screen P13 and the tabular screen P12 by using the display different from that for the other parts, whereby it is possible to intuitively grasp the wind speed and the altitude range of the wind disturbance of concern at sight.

Further, the landing decision support system 1 further has the sensor switching unit 265 that switches between a plurality of the weather sensors to determine the weather sensor that serves as an information provision source for the various screens according to an instruction from the user or automatically, whereby it is possible to grasp the observation device that provides the currently displayed information, and hence the information becomes effective when a specialist of the weather or a sensor maker monitors the display and, for example, in the case where the displayed wind disturbance information seems abnormal, the information can be used for troubleshooting by which the weather sensor having a problem is found out.

In addition, the landing decision support system 1 further has the text conversion unit 262 that converts the information included in the screen generated by the screen generation unit 220 into the text format that allows the transmission to the equipment installed in the aircraft, whereby it is possible to transmit necessary and sufficient information to the aircraft to perform planning of landing and briefing before takeoff excellently based on the sufficient information even on the aircraft, it is possible to share the information with the user on the aircraft, and the load of the flight dispatcher for organizing the information sent to the aircraft is reduced. In particular, the spatial graph information of the head wind leads to intuitive recognition of the increase the decrease of the head wind and the altitude range of the significant wind change.

Further, the landing decision support system 1 further has the information generation unit 120 that generates various information items from the observation information including the echo intensity data of the observation target acquired by the weather sensor, and the information generation unit 120 has the extraction unit 181 that sets a plurality of the three-dimensional regions R defined by the predetermined two-dimensional region in the horizontal plane and the predetermined area in the vertical direction in the observation region of the weather sensor, and extracts a plurality of values included in each three-dimensional region R from the echo intensity data, and the echo summary statistic calculation unit 182 that calculates the summary statistic of the echo intensity data in each three-dimensional region by using the plurality of values extracted by the extraction unit 181 as the population, whereby it is possible to implement the two-dimensional display that utilizes the summary statistic and secure excellent viewability in the display while preventing the failure to detect the local phenomenon.

In addition, the information generation unit 120 further has the vector calculation unit 191 that calculates the motion vector of the observation target based on the information on the summary statistic in each three-dimensional region acquired by the echo summary statistic calculation unit 182 at a plurality of past timings, the vector summary statistic calculation unit 192 that calculates the summary statistic of the motion vector by using a plurality of the motion vectors acquired by the vector calculation unit 191 as the population, and the prediction information calculation unit 193 that calculates the predicted value of the summary statistic of the echo intensity data based on the summary statistic of the motion vector acquired by the vector summary statistic calculation unit 192 and the summary statistic of the echo intensity data acquired by the echo summary statistic calculation unit 182, whereby it is possible to generate the short-term prediction information having high accuracy without requiring great calculation cost.

Further, the information generation unit 120 has the data processing unit that performs preprocessing on the data on wind directions and the data on wind speeds at the plurality of predetermined altitudes on the landing path acquired by the weather sensor and the bearing data on the runway, and the landing difficulty level estimation unit 160 that estimates the landing difficulty level with the first estimation model by using the information on the model of the aircraft and the fluctuation range of the flight condition of the aircraft at the plurality of predetermined altitudes outputted by the data processing unit as the input information, and the first estimation model is constructed by the nonlinear multivariate analysis method by using the flight data of the aircraft that has flown on the landing path as the estimation target and landed and the evaluation data obtained by the subjective evaluation of the landing difficulty level by the pilot as the leaning data, whereby it is possible to estimate the landing difficulty level having high usability and highly correlated with the occurrence of an operation trouble or an accident in which the specific landing path and the evaluation data obtained by the subjective evaluation by the pilot are reflected.

In addition, the wind disturbance estimation unit 140 estimates the fluctuation range of the head wind component, the fluctuation range of the cross wind component, and the fluctuation range of the vertical wind component of the wind speed at the plurality of predetermined altitudes with the second estimation model by using the data acquired by performing the preprocessing on the data on wind directions and the data on wind speeds at the plurality of predetermined altitudes on the landing path acquired by the weather sensor and the bearing data on the runway as the input information, and the second estimation model is constructed by the nonlinear multivariate analysis method by using the flight data of the aircraft that has flown on the landing path as the estimation target and landed as the learning data, whereby it is possible to estimate the fluctuation range of the head wind component, the fluctuation range of the cross wind component, and the fluctuation range of the vertical wind component of the wind speed that are factors responsible for the fluctuation of the flight condition of the aircraft with high accuracy with the information on the specific landing path reflected therein.

Further, the wind disturbance estimation unit 140 calculates the head wind components of the wind speed and the cross wind components of the wind speed at the plurality of predetermined altitudes by performing the coordinate transformation by using the data on wind directions and the data on wind speeds at the plurality of predetermined altitudes on the landing path acquired by the weather sensor and the bearing data on the runway as the input information, calculates the altitude change rate of the head wind component and the altitude change rate of the cross wind component at the plurality of predetermined altitudes by performing the numerical differentiation on each head wind component and each cross wind component in the altitude direction, and estimates the fluctuation range of the head wind component, the fluctuation range of the cross wind component, and the fluctuation range of the vertical wind component of the wind speed with the second estimation model by using the head wind component, the cross wind component, the altitude change rate of the head wind component, the altitude change rate of the cross wind component, and the altitude as the input information, and the second estimation model is constructed by the nonlinear multivariate analysis method by using the flight data of the aircraft that has flown on the landing path as the estimation target and landed as the learning data, whereby it is possible to estimate the fluctuation range of each component of the wind speed having high accuracy in which the information on the specific landing path is reflected from the data on wind directions and the data on wind speeds at the plurality of predetermined altitudes on the landing path and the bearing data on the runway.

In addition, the aircraft response estimation unit 150 estimates the fluctuation range of the flight condition of the aircraft at the plurality of altitudes with the third estimation model by using the head wind components and the cross wind components on the landing path at the plurality of predetermined altitudes and the fluctuation range of the head wind component, the fluctuation range of the cross wind component, and the fluctuation range of the vertical wind component at the plurality of predetermined altitude as the input information, and the third estimation model is constructed by the nonlinear multivariate analysis method by using the flight data of the aircraft that has flown on the landing path as the estimation target and landed as the learning data, whereby it is possible to estimate the fluctuation range of the flight condition of the aircraft that is an important element in the estimation of the landing difficulty level with high accuracy with the information on the specific landing path reflected therein, and hence it is possible to estimate the landing difficulty level having high usability.

In winter, at an airport having heavy snowfall, a snow removal operation is required for takeoff or landing of the aircraft. However, an event in which snowfall comes a few minutes after the snow removal of the runway and the snow has to be removed again so that the aircraft cannot land often occurs. To cope with this, it becomes possible to cause the aircraft to take off and land efficiently by determining the timing of the snow removal of the runway from the radar echo at the observation time and the radar echo prediction information the designated time period later, and it is possible to contribute to an improvement in in-service rate.

### [Industrial Applicability]

The present invention can be used in data processing of observation data of a weather sensor that is already installed or will be installed by meteorological agencies, airlines, or meteorological service suppliers, and has industrial applicability. In addition, the present invention can also be applied to data processing software of the observation information of the weather sensor produced by software makers of weather data processing, avionics makers, or weather sensor makers.

## Claims

1. A landing decision support system for providing information for supporting a decision of an aircraft landing, the landing decision support system comprising:
a screen generation unit that generates various screens displayed in a display unit; and
a display control unit that causes the display unit to display the various screens generated by the screen generation unit, wherein
the screen generation unit includes an echo intensity screen generation unit that generates an echo intensity screen, and
echo intensity information included in the echo intensity screen is generated based on echo intensity data of an observation target acquired by a weather sensor and displays a horizontal distribution of an echo intensity, using a summary statistic of the echo intensity in an area around an airport in a predetermined altitude range.

2. The landing decision support system according to claim 1, wherein
the latest echo intensity information and prediction information on a future echo are displayed side by side in the echo intensity screen.

3. The landing decision support system according to claim 1 or 2, wherein
the echo intensity screen displays information on echo intensity at or below a designated altitude so as to superimpose the information on echo intensity on a map of the area around the airport indicative of positions of the airport, a landing path, and another aircraft, and
the display control unit updates the echo intensity screen at an interval of 1 minute to 2 minutes.

4. The landing decision support system according to any of claims 1 to 3, wherein
the screen generation unit includes a warning screen generation unit that generates a warning screen including landing difficulty level information indicative of a landing difficulty level for an aircraft, and
the landing difficulty level information is generated based on data on wind directions and data on wind speeds at a plurality of predetermined altitudes on the landing path acquired by the weather sensor, bearing data on a runway, and information on a model of the aircraft.

5. The landing decision support system according to claim 4, wherein
the landing difficulty level information includes the latest landing difficulty level for the aircraft and trend information indicative of a trend of change in the landing difficulty level.

6. The landing decision support system according to claim 4 or 5, wherein
the warning screen includes information indicative of increase/decrease of a head wind component of a wind speed along a runway direction in the predetermined altitude range and on the landing path, disturbance occurrence information indicative of occurrence of a wind disturbance and an altitude range in which the wind disturbance has occurred, and flight condition information indicative of an effect of the disturbance on a flight condition of the aircraft.

7. The landing decision support system according to any of claims 4 to 6, wherein
the screen generation unit further has a warning history screen generation unit that generates a warning history screen including information included in the past warning screen.

8. The landing decision support system according to any of claims 4 to 7, wherein
the landing difficulty level information is generated for each model of an aircraft,
the landing decision support system further comprising a model switching unit that switches a target model of the landing difficulty level information to be displayed by the display unit according to a request from a user.

9. The landing decision support system according to any of claims 1 to 8, wherein
the screen generation unit further includes a graph screen generation unit that generates a graph screen including a graph indicative of a change of the head wind component of the wind speed along the runway direction on the landing path relative to an altitude, and a tabular screen generation unit that generates a tabular screen including a table indicative of the head wind component of the wind speed at each predetermined altitude on the landing path,
the graph included in the graph screen and the table included in the tabular screen are generated based on the data on wind directions and the data on wind speeds at the plurality of predetermined altitudes on the landing path acquired by the weather sensor, and
the display control unit causes the display unit to display the graph screen and the tabular screen side by side.

10. The landing decision support system according to claim 9, wherein
the graph included in the graph screen shows both of a change of the latest head wind component and a change of the past head wind component at or below the designated altitude in one graph, and
the table included in the tabular screen shows the latest head wind component and the past head wind component at or below the designated altitude.

11. The landing decision support system according to claim 9 or 10, wherein
the display control unit causes the display unit to display the warning screen including the landing difficulty level information, the graph screen, and the tabular screen side by side and, in a case where determination is made that the landing difficulty level is high, the display control unit indicates, in the graph screen and the tabular screen, parts corresponding to a wind change correlated with the landing difficulty level and the altitude range in which the wind change occurs by using a display different from that of another part.

12. The landing decision support system according to any of claims 1 to 11, further comprising a sensor switching unit that switches between a plurality of the weather sensors to determine the weather sensor that serves as an information provision source for the respective screens according to an instruction from the user or automatically.

13. The landing decision support system according to any of claims 1 to 12, further comprising a text conversion unit that converts information included in the screen generated by the screen generation unit into a text format that can be transmitted to equipment installed in the aircraft.

14. The landing decision support system according to any of claims 1 to 13, further comprising an information generation unit that generates various information items from observation information including the echo intensity data of the observation target acquired by the weather sensor, wherein
the information generation unit has:
an extraction unit that sets a plurality of three-dimensional regions defined by a predetermined two-dimensional region in a horizontal plane and a predetermined area in a vertical direction in an observation region of the weather sensor and extracts a plurality of values included in each of the three-dimensional regions from the echo intensity data; and
an echo summary statistic calculation unit that calculates a summary statistic of the echo intensity data in each of the three-dimensional regions by using the plurality of values extracted by the extraction unit as a population.

15. The landing decision support system according to claim 14, wherein
the information generation unit further has:
a vector calculation unit that calculates a motion vector of the observation target, based on information on the summary statistic in each of the three-dimensional regions acquired by the echo summary statistic calculation unit at a plurality of past timings;
a vector summary statistic calculation unit that calculates the summary statistic of the motion vector by using a plurality of the motion vectors acquired by the vector calculation unit as the population; and
a prediction information calculation unit that calculates a predicted value of the summary statistic of the echo intensity data, based on the summary statistic of the motion vector acquired by the vector summary statistic calculation unit and the summary statistic of the echo intensity data acquired by the echo summary statistic calculation unit.

16. The landing decision support system according to any of claims 1 to 15, comprising an information generation unit that generates various information items from observation information acquired by the weather sensor, wherein
the information generation unit has:
a data processing unit that performs preprocessing on the data on wind directions and the data on wind speeds at the plurality of predetermined altitudes on the landing path acquired by the weather sensor and the bearing data on the runway; and
a landing difficulty level estimation unit that estimates the landing difficulty level with a first estimation model by using the model information on the aircraft and a fluctuation range of the flight condition of the aircraft at the plurality of predetermined altitudes outputted by the data processing unit as input information, and
the first estimation model is constructed by a nonlinear multivariate analysis method by using flight data of the aircraft that has flown on the landing path as an estimation target and landed and evaluation data obtained by subjective evaluation of the landing difficulty level by a pilot as learning data.

17. The landing decision support system according to any of claims 1 to 16, comprising an information generation unit that generates various information items from observation information acquired by the weather sensor, wherein the information generation unit has a wind disturbance estimation unit,
the wind disturbance estimation unit estimates a fluctuation range of the head wind component, a fluctuation range of a cross wind component, and a fluctuation range of a vertical wind component of the wind speed at the plurality of predetermined altitudes with a second estimation model by using data acquired by performing the preprocessing on the data on wind directions and the data on wind speeds at the plurality of predetermined altitudes on the landing path acquired by the weather sensor and the bearing data on the runway as the input information, and
the second estimation model is constructed by the nonlinear multivariate analysis method by using the flight data of the aircraft that has flown on the landing path as the estimation target and landed as the learning data.

18. The landing decision support system according to any of claims 1 to 17, comprising an information generation section that generates various information items from observation information acquired by the weather sensor, wherein
the information generation unit has a wind disturbance estimation unit,
the wind disturbance estimation unit calculates head wind components of the wind speed and the cross wind components of the wind speed at the plurality of predetermined altitudes by performing coordinate transformation by using the data on wind directions and the data on wind speeds at the plurality of predetermined altitudes on the landing path acquired by the weather sensor and the bearing data on the runway as the input information, calculates an altitude change rate of the head wind component and an altitude change rate of the cross wind component at the plurality of predetermined altitudes by performing numerical differentiation on each head wind component and each cross wind component in an altitude direction, and estimates the fluctuation range of the head wind component, the fluctuation range of the cross wind component, and the fluctuation range of the vertical wind component of the wind speed with the second estimation model by using the head wind component, the cross wind component, the altitude change rate of the head wind component, the altitude change rate of the cross wind component, and the altitude as the input information, and
the second estimation model is constructed by the nonlinear multivariate analysis method by using the flight data of the aircraft that has flown on the landing path as the estimation target and landed as the learning data.

19. The landing decision support system according to any of claims 1 to 18, comprising an information generation unit that generates various information items from observation information acquired by the weather sensor, wherein
the information generation unit has an aircraft response estimation unit,
the aircraft response estimation unit estimates the fluctuation range of the flight condition of the aircraft at the plurality of predetermined altitudes with a third estimation model by using the head wind components and the cross wind components on the landing path at the plurality of predetermined altitudes, and the fluctuation range of the head wind component, the fluctuation range of the cross wind component, and the fluctuation range of the vertical wind component at the plurality of predetermined altitudes as the input information, and
the third estimation model is constructed by the nonlinear multivariate analysis method by using the flight data of the aircraft that has flown on the landing path as the estimation target and landed as the learning data.

20. A landing decision support method for providing information for supporting a decision of an aircraft landing, the landing decision support method comprising:
generating by an echo intensity screen generation unit an echo intensity screen including echo intensity information that is generated based on echo intensity data of an observation target acquired by a weather sensor and displays a horizontal distribution of an echo intensity, using a summary statistic of the echo intensity in an area around an airport in a predetermined altitude range; and
causing a display unit to display the generated echo intensity screen using a display control unit.

21. A landing decision support program for providing information for supporting a decision of an aircraft landing, the landing decision support program causing a computer to execute:
a procedure of generating by an echo intensity screen generation unit an echo intensity screen including echo intensity information that is generated based on echo intensity data of an observation target acquired by a weather sensor and displays a horizontal distribution of an echo intensity using a summary statistic of the echo intensity in an area around an airport in a predetermined altitude range; and
a procedure of causing a display unit to display the generated echo intensity screen using a display control unit.
